# EUROPEAN PATENT SPECIFICATION

(11) **EP 1 448 045 B1**
(45) Date of publication and mention of the grant of the patent: **16.01.2008**
(21) Application number: 02795071.6
(22) Date of filing: 23.11.2002
(51) Int. Cl.: A01G 25/02

(54) **DROP-BY-DROP IRRIGATION HOSE HAVING INTERNAL DRIPPING ELEMENTS**
TROPFENWEISER BEWÄSSERUNGSSCHLAUCH MIT INNEREN TROPFELEMENTEN
TUYAU D'IRRIGATION GOUTTE A GOUTTE DOTE D'ELEMENTS D'EGOUTTEMENT INTERNES

(30) Priority: 28.11.2001 IT MI20012497
(43) Date of publication of application: 25.08.2004
(73) Proprietor: Agriplastic S.r.l., 94017 Regalbuto (IT)
(72) Inventor: SPAMPINATO, Vincenzo, I-94017 Regalbuto (IT)
(74) Representative: Zanella, Ireneo
(86) International application number: PCT/EP2002/013184
(87) International publication number: WO 2003/045131

(56) References cited:
- EP-A- 0 448 234
- US-A- 5 636 797
- US-A- 5 829 686
- DATABASE WPI Section PQ, Week 199616 Derwent Publications Ltd., London, GB; Class P42, AN 1993-197427 XP002246146 & IT 1 255 120 B (PERI G), 20 October 1995 (1995-10-20) cited in the application

## Description

### Field of the invention

The present invention relates to a drop-by-drop irrigation hose having internal dripping elements for the so-called "drop-by-drop" irrigation of plots of land according to the preamble of claim 1 and dripping elements according to the preamble of claim 4.

### Background of the invention

As is known, drop-by-drop irrigation hoses and the dripping elements therefor consists of plastic, and said dripping elements are thermo-welded with the internal surface of said irrigation hose at a regular pitch during the hose extrusion.

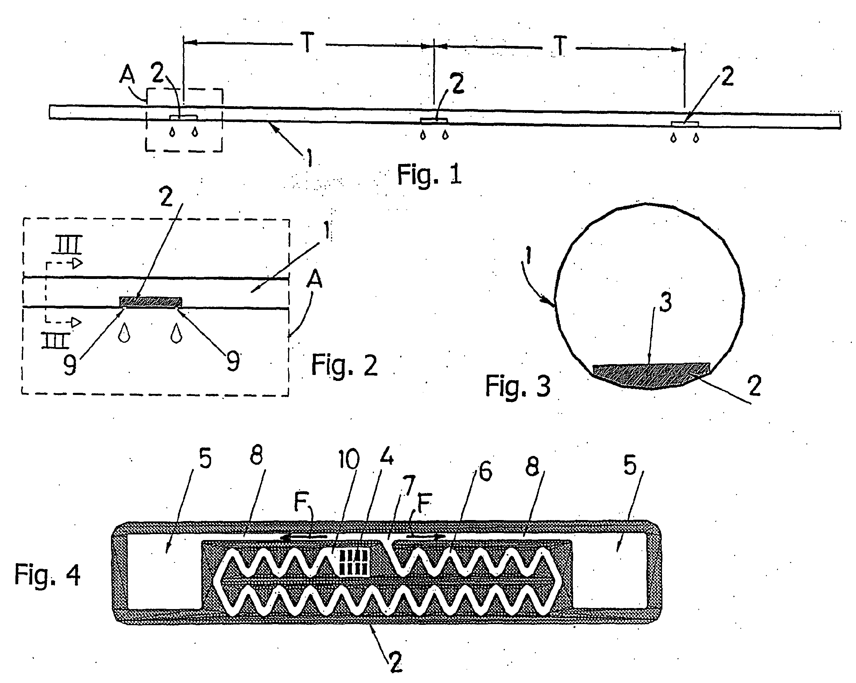

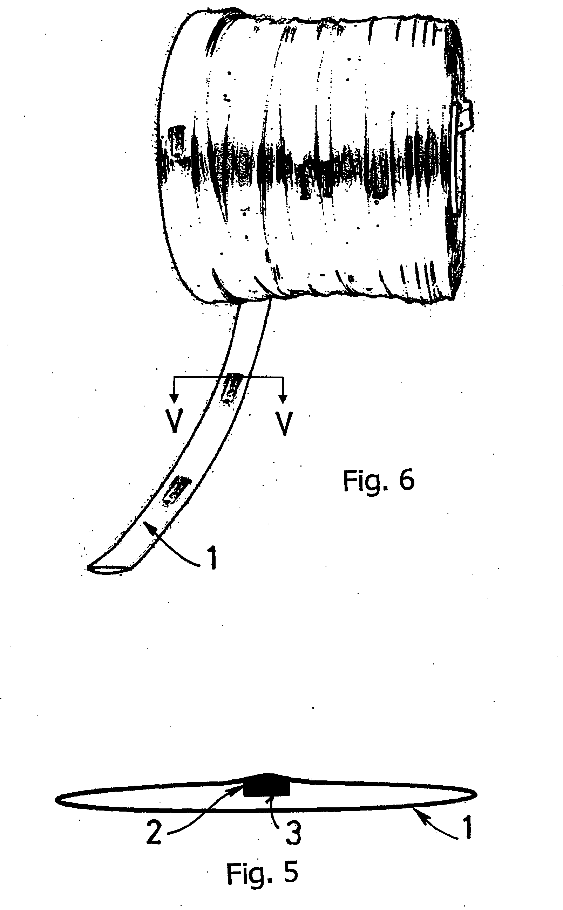

A know drop-by-drop irrigation hose having internal dripping elements of this type is disclosed in the IT-A-1,255,120 in which three embodiments of said dripping elements are shown and claimed, and more precisely:
a) a first embodiment (Figures 1 to 4) in which the dripping elements have a cylindrical body on the external surface thereof are provided two diametrically opposed equal conformations comprising each a filter-like perforated zone from which a winding flow path leads to a discharging chamber which is in communication with the external environment through one or more small holes in the hose wall.
b) A second embodiment (Figures 5 to 8) having a body as a cylinder sector which covers about one third of the internal hose circumference. Two filter zones and two discharging chambers connected with said filter zones through two winding flow paths are provided, wherein said discharging chambers and filter zones are placed at the ends of said dripping elements and said flow paths are provided parallel to the longitudinal dripping element axis.
c) The third embodiment (Figures 9 and 10) relates to a dripping element which is formed by two diametrically opposite dripping elements of the type b) which are spaced by two cylindrical sectors having a massive wall.

Said three embodiments a), b) and c) have the common feature to provide in each dripping element two equal hydraulic circuits having a central flow path in communication, at one end, with a filter zone and, at the other end, with a discharging chamber.

According to the teaching of IT-A-1,255,120 only one discharging chamber is perforated, that is in communication with the external environment by means of one or more holes whereas the second discharging chamber is a blind chamber which is to be manually perforated by a countryman during the use of the irrigation hose. More particularly, the perforation of said blind discharging chamber will be made by a countryman on the spot by means of a punch when the latter during surveillance inspections on the land notice that a land area near a plant to be watered is dry. Such drop delivering interruptions are due, for example, to a clogging of the filter or flow path of the first discharging chamber.

### Summary of the invention

Accordingly, the chief aim of the present invention is to provide a drop-by-drop irrigation hose having internal dripping elements which are more reliable with respect to clogging risks, and are able to accomplish an efficient self-cleaning action of the flow path of said dripping elements as well as to increase the area of the watered surface.

Another aim of the present invention is to suggest a smaller and lighter dripping element structure so that the manufacturing costs thereof may be reduced.

Still another aim of the present invention is to avoid that a plant may dye or may be damaged because a discharging chamber becomes clogged, and to drastically reduce above mentioned surveillance inspections.

The above mentioned aims are achieved according to the present invention by a drop-by-drop irrigation hose and internal dripping elements presenting the features stated in claims 1 and 4. In the preambles of claims 1 and 4 have been set forth the common features disclosed in IT-A-1,255,120.

Further improvements of the invention are disclosed in the dependent claims.

The invention provides several important advantages.

Due to the fact that in each dripping element having a hollow box-like body in the bottom thereof is provided a single filter zone and e single flow path, having a meandering labyrinth-shaped development which creates an efficient self-cleaning action it is therewith possible to confer to the dripping elements a strip-like configuration with small dimensions. This permits on the one hand to obtain lighter and chipper dripping elements and to facilitate on the other hand the thermo-welding process because the surface to be welded is reduced, as well as to reduce the welding process time.

The smaller strip-like area of the dripping elements to be thermo-welded to the internal hose surface allows said dropping elements to be used for a greater range of hose diameters.

The achieved self-cleaning of the flow path permits to avoid a clogging of the latter, and this, together with the suggestion of perforating all provided discharging chambers during the manufacturing of the irrigation hose, makes the known surveillance inspections superfluous.

Further, the provision of perforations in all provided discharging chambers allows a real enlargement of the irrigated land surface as well as a greater and quicker water distribution in the soil. At the same time a reduction of the percolation on the hose is reached because the outgoing flow is divided in more delivering paths.

Another advantage is to be seen in the fact that after an irrigation cycle a total emptying of the dripping elements is achieved and this considerably reduces the risk of bio-clogging, that is the clogging which is due to the known dissolution or presence of bio-components in the irrigation water.

### Brief description of the drawings

Further characteristics, advantages and details of the drop-by-drop irrigation hose and dripping elements according to the invention will become more apparent hereinafter from the following disclosure of a drop-by-drop irrigation hose with internal dripping elements according to the invention which are schematically illustrated, by way of an indicative example, in the accompanying drawing in which are represented several figures, drawn on different scales, and where:
Figure 1 is a view on a section of the drop-by-drop irrigation hose according to the present invention;
Figure 2 shows a the detail A of Figure 1 on an enlarged scale;
Figure 3 is a cross-sectional view taken along line III-III of Figure 2;
Figure 4 is a top plan view on a dripping element according to the invention on an enlarged scale;
Figure 5 is a cross sectional view taken along line V-V of Figure 6 across a flat hose in the flat condition; and
Figure 6 is a perspective view of a flat hose provided with dripping elements according to the invention winded up to form a coil.

### Description of the preferred embodiment

Reference is made to the Figures in which a section of a drop-by-drop irrigation hose is denoted by 1 wherein said hose 1 is, for example, a flexible pipe or hose on the internal surface of which a number of dripping elements 2 are thermo-welded which are spaced by the pitch T.

According to the present invention said dripping elements 2 have the conformation of a strip-like hollow parallelepiped having a bottom 3, wherein the top wall of the dripping element is omitted because it will be formed by the internal surface of the hose 1 after having perimetrically thermo-welded said dripping element 2 to said hose internal surface, in a known manner.

In the bottom 3 is provided a perforated zone 4 defining a filter structure. According to the present invention more discharging chambers 5 are provided. In the shown example are provided two discharging chambers 5 at the ends of said dripping element 2. A meandering flow path is denoted by 6.

As inferable from Figure 4, the meandering flow path 6 is in communication at one end with said filter 4 through the opening 10 and at the other end with a channel 8 through the opening 7, wherein said channel 8 opens at both ends thereof in an end discharging chamber 5, respectively. The arrows F show the partitions of the water flow coming from the winding labyrinth-like flow path 6 towards said discharging chambers 5. In the shown example to both discharging chambers 5 will be substantially delivered the same water amount by said channel 8. Holes or perorations in the hose 1 above the underlying discharging chambers 5 are denoted by 9.

As said perforations 9 through the hose wall above all provided discharging chambers 5 are made during the extrusion of said hose 1, the perforations 9 may be provided with any desirable pitch T as chosen for the dripping elements 2, and it is therefor no more necessary to form the know "depressions" in the irrigation flexible pipe 1.

The chosen narrow strip-like box-like design of the dripping elements 2 is clearly inferable from the Figures 3 and 4. Said dripping elements 2 are placed consecutively along a common generating line of the hose 1, so that with the positioning thereof on the land as shown in the drawing a total emptying of said dripping elements 2 after each irrigation cycle will be reliably achieved.

During irrigation the water flowing in the hose 1 will flow on the bottom 3 of said dripping elements 2 and enter therein trough the filter 4. From said filter 4 the irrigation water will flow along the meandering flow path 6 with formation of turbolences therein - and corresponding self-cleaning action in said meandering flow path 6 - up to said channel opening 7 and subsequent water partition in both branches of said channel 8 and enter the perforated discharging chambers 5. The water will then leave said discharging chambers 5 drop-by-drop and water the soil in a number of areas, in the shown example in two areas.

If a discharging chamber 5 in the suggested dripping elements 2 should become clogged, the irrigation will continue with the other provided discharging chamber/chambers 5.

From the above constructional and operating disclosure, it should be apparent that with the teaching according to the present invention to provide a single filter 4, a single meandering flow path 6, as well as two or more discharging chambers 5, which latter are all perforated during the manufacturing of the irrigation hose 1, it is possible to efficiently achieve the indicated aims and the mentioned advantages.

In practicing the invention, one skilled in the art can perform technical and/or functional equivalent modifications or variations concerning the single parts of the dripping elements 2 according to the present invention without departing from the scope of the invention.

The present example, therefore, is to be considered in all respects as illustrative and not restrictive, and the invention is not to be limited to the details given herein.

## Claims

1. A drop-by-drop irrigation hose consisting of plastic and having a number of internal hollow plastics dripping elements having a hollow box-like body and spaced from each other by a pitch, and thermo-welded to the internal surface of said irrigation hose along the top of said dripping elements, wherein in the bottom of said dripping elements are provided a filter means in communication with discharging chambers which are formed between said bottom and the internal hose surface, **characterized by** the combination of the following features:
i) said filter means is formed by a single filter (4),
ii) said filter (4) is in communication with a labyrinth-like flow path (6) which simultaneously opens in a number of discharging chambers (5), and
iii) all the provided discharging chambers (5) are in communication with the hose external environment by means of one or more holes (9) through the hose wall,
said hose (1) being either a circular flexible pipe or a flat hose.

2. An irrigation hose according to claim 1, **characterized in that** said labyrinth-like flow path (6) opens in two discharging chambers (5)
which are provided at the ends of said dripping elements (2).

3. An irrigation hose (1) according to claim 1 and 2, **characterized in that** said filter (4) is provided in a middle area of the dripping element bottom (3) and said single labyrinth-like flow path (6) develops along two parallel longitudinal branches.

4. A dripping element for a drop-by-drop irrigation hose which dripping element has a box-like body to be thermo-welded to the internal surface of said irrigation hose along the top of said dripping element, wherein in the bottom of said dripping element is provided a filter means in communication with discharging chambers to be formed between said dripping element bottom and the internal surface of said irrigation hose, **characterized by** the combination of the following features:
i) said filter means is formed by a single filter (4) which is provided in a middle area of said dripping element bottom (3),
ii) said filter (4) is in communication with a labyrinth-like flow path (6) which simultaneously opens in two discharging chambers (5) which are provided at the ends of said dripping element (2), and
iii) said discharging chambers (5) are in communication with the hose external environment by means of one or more holes (9) through the hose wall.

5. A dripping element according to claim 4, **characterized in that** it presents a strip-like configuration.

## Patentansprüche

1. Ein Kunststoffschlauch für die Tröpfchenbewässerung, mit einer Vielzahl innen angeordneter hohler Tropfelemente, die einen hohlen gehäuseartigen Grundkörper aufweisen, in einer Teilung beabstandet voneinander angeordnet sind und an der Oberseite der Tropfelemente mit der inneren Oberfläche des Bewässerungsschlauchs verschweißt sind, während in der Bodenseite der Tropfelemente mit Auslasskammern in Verbindung stehende Filterelemente vorgesehen sind, wobei die Auslasskammern zwischen der Bodenseite und der inneren Oberfläche des Bewässerungsschlauchs angeordnet sind, **gekennzeichnet durch** die Kombination mit den folgenden Merkmalen:
i) die Filterelemente sind von einem einzelnen Filter (4) gebildet,
ii) der Filter (4) steht mit einem labyrinthartigen Strömungspfad (6) in Verbindung, der sich zugleich in eine Mehrzahl Auslasskammern (5) öffnet, und
iii) alle vorgesehenen Auslasskammern (5) stehen mit der Umgebung des Bewässerungsschlauchs über ein oder mehrere Löcher (9) in der Schlauchwandung in Verbindung,
wobei der Bewässerungsschlauch (1) entweder als kreisförmiges flexibles Rohr oder als flacher Schlauch ausgebildet ist.

2. Ein Bewässerungsschlauch nach Anspruch 1, **dadurch gekennzeichnet, dass** der labyrinthartige Strömungspfad (6) mit zwei Auslasskammern (5) in Verbindung steht, die an den Enden der Tropfelemente (2) angeordnet sind.

3. Ein Bewässerungsschlauch (1) nach Anspruch 1 oder 2, **dadurch gekennzeichnet, dass** der Filter (4) im mittleren Bereich des Bodens (3) der Tropfelemente vorgesehen ist und dass sich der einzige labyrinthartige Strömungspfad (6) mit zwei parallelen Zweigen entlang erstreckt.

4. Ein Tropfelement für einen Bewässerungsschlauch, das einen hohlen gehäuseartigen Grundkörper aufweist, der an der Oberseite der Tropfelemente mit der inneren Oberfläche des Bewässerungsschlauchs verschweißt ist, während in der Bodenseite des Tropfelements mit Auslasskammern in Verbindung stehende Filterelemente vorgesehen sind, wobei die Auslasskammern zwischen der Bodenseite der Tropfelemente und der inneren Oberfläche des Bewässerungsschlauchs angeordnet sind, **gekennzeichnet, durch** die Kombination mit den folgenden Merkmalen:
i) die Filterelemente sind von einem einzelnen Filter (4) gebildet, der im mittleren Bereich des Bodens (3) der Tropfelemente vorgesehen ist,
ii) der Filter (4) steht mit einem labyrinthartigen Strömungspfad (6) in Verbindung, der sich zugleich in eine Mehrzahl Auslasskammern (5) öffnet, die an den Enden der Tropfelemente (2) angeordnet sind, und
iii) die Auslasskammern (5) stehen mit der Umgebung des Bewässerungsschlauchs über ein oder mehrere Löcher (9) in der Schlauchwandung in Verbindung.

5. Ein Tropfelement nach Anspruch 4, **dadurch gekennzeichnet, dass** es eine streifenförmige Gestalt aufweist.

## Revendications

1. Tuyau d'irrigation goutte à goutte réalisé en plastique et comportant un nombre d'éléments d'égouttement internes creux en plastique ayant un corps creux en forme de boîte et espacés les uns des autres selon un pas, et thermo-soudés à la surface interne dudit tuyau d'irrigation le long du dessus desdits éléments d'égouttement, où dans le fond desdits éléments d'égouttement sont prévus un moyen de filtration en communication avec des chambres d'évacuation qui sont formées entre ledit fond et la surface de tuyau interne, **caractérisé par** la combinaison des caractéristiques suivantes:
i) ledit moyen de filtration est formé par un filtre unique (4),
ii) ledit filtre (4) est en communication avec un chemin d'écoulement semblable à un labyrinthe (6) qui s'ouvre simultanément en un nombre de chambres d'évacuation (5), et
iii) toutes les chambres d'évacuation prévues (5) sont en communication avec l'environnement externe du tuyau par un ou plusieurs trous (9) à travers la paroi du tuyau,
ledit tuyau (1) étant soit un tuyau circulaire flexible soit un tuyau plat.

2. Tuyau d'irrigation selon la revendication 1, **caractérisé en ce que** ledit chemin d'écoulement semblable à un labyrinthe (6) s'ouvre dans deux chambres d'évacuation (5) qui sont réalisées aux extrémités desdits éléments d'égouttement (2).

3. Tuyau d'irrigation (1) selon la revendication 1 et 2, **caractérisé en ce que** ledit filtre (4) est réalisé dans une zone au milieu du fond d'élément d'égouttement (3), et que ledit chemin d'écoulement unique semblable à un labyrinthe (6) se développe le long de deux branches longitudinales parallèles.

4. Elément d'égouttement pour un tuyau d'irrigation goutte à goutte, ledit élément d'égouttement présente un corps en forme de boîte à thermosouder à la surface interne dudit tuyau d'irrigation le long du dessus dudit élément d'égouttement, où dans le fond dudit élément d'égouttement est prévu un moyen de filtration en communication avec les chambres d'évacuation à former entre ledit fond d'élément d'égouttement et la surface interne dudit tuyau d'irrigation, **caractérisé par** la combinaison des caractéristiques suivantes:
i) ledit moyen de filtration est formé par un filtre unique (4) qui est prévu dans une zone médiane dudit fond d'élément d'égouttement (3),
ii) ledit filtre (4) est en communication avec un chemin d'écoulement (6) semblable à un labyrinthe qui s'ouvre simultanément dans deux chambres d'évacuation (5) qui sont réalisées aux extrémités dudit élément d'égouttement (2), et
iii) lesdites chambres d'évacuation (5) sont en communication avec l'environnement externe du tuyau par un ou plusieurs trous (9) à travers la paroi du tuyau.

5. Elément d'égouttement selon la revendication 4, **caractérisé en ce qu'**il présente une configuration semblable à une bande.
